# EUROPEAN PATENT APPLICATION

(11) **EP 2 543 550 A1**
(43) Date of publication of application: **09.01.2013**
(21) Application number: 11750397.9
(22) Date of filing: 04.03.2011
(51) Int. Cl.: B60R 11/02, B60K 37/00

(54) **INFORMATION DISPLAY SYSTEM, INFORMATION DISPLAY DEVICE, AND INFORMATION PROVIDING DEVICE**

(30) Priority: 11.03.2010 JP 2010053996; 04.03.2010 JP 2010047444
(71) Applicant: Panasonic Corporation, Kadoma-shi Osaka 571-8501 (JP)
(72) Inventor: NAKAGAWA, Seiichi, Osaka 540-6207 (JP); NISHIMURA, Kenji, Osaka 540-6207 (JP); OJIMA, Yasuo, Osaka 540-6207 (JP)
(74) Representative: Schwabe - Sandmair - Marx
(86) International application number: PCT/JP2011/001290
(87) International publication number: WO 2011/108284

(57) **Abstract**

Disclosed is a display system capable of achieving a prompt drive-forced function even in an environment where, as in a remote UI, a delay occurs until a change by an information providing device is reflected in an information display device. This display system is provided with an information providing device (101) and an information display device (111), said information providing device (101) comprising a communication section "a" (104) and an accumulation section (102) which accumulates scripts (103) that include displayed parts constituting displayed images and the arrangement thereof, descriptions of animation movements etc. of the displayed parts, and drive-forced flags for all of the displayed parts, and said information display device (111) comprising a communication section "b" (112), a script processing section (113), a display section (114), and a sensor determination section (115).

## Description

### Technical Field

The present invention relates to an information display system, information display apparatus, and information providing apparatus.

### Background Art

Drive-forced processing - that is, processing that, for safety reasons, restricts a user operation screen for which there is a problem in terms of safety by operating a car navigation apparatus while driving - has heretofore been known (see Patent Literature 1, for example).

Also, at present, car navigation, car AV, and suchlike systems provided with a liquid crystal or suchlike display section and an input section such as a touch panel utilized installed inside a vehicle are widely used. For ease of installation, some of these are configured with an information display apparatus provided with a display section and an information providing apparatus provided with a function providing section as separate entities.

### Citation List

### Patent Literature

PTL1
   Japanese Patent Application Laid-Open NO. HEI 9-159468

### Summary of Invention

### Technical Problem

With a conventional configuration in which an information display apparatus and information providing apparatus are separate entities, a user interface is implemented using a method whereby the information providing apparatus composes video to be displayed by the information display apparatus and transmits this to the information display apparatus. With this method, there is very little time delay due to video transmission, and therefore a drive-forced function (a function that performs a processing operation to restrict the user operation screen according to vehicle drive) can be implemented speedily by the information providing apparatus alone.

However, with a (remote UI) method whereby a user interface is implemented by having a script sent from an information providing apparatus executed by a display apparatus, a delay due to communication and script execution occurs before a change by the information providing apparatus is displayed by the information display apparatus.

Consequently, when the conventional method is applied to a remote UI, a problem is that drive-forced function implementation is delayed, and user safety decreases.

The present invention has been devised in order to solve this problem with the conventional technology, and it is an object of the present invention to provide an information display system, information display apparatus, and information providing apparatus capable of implementing a drive-forced function speedily even in an environment in which a remote UI is used.

### Solution to Problem

An information display system of the present invention for achieving the above object is installed in a vehicle, and employs a configuration provided with: an information providing apparatus that transmits a script a display part; an information display apparatus that interprets a script transmitted by the information providing apparatus and displays a composed display image; and a sensor determination apparatus that reports the driving state of the vehicle to the display apparatus; wherein the display part can change between at least two display states of normal display and drive-forced display, and the information display apparatus changes the display state of the display part based on a report result from the sensor determination apparatus.

### Advantageous Effects of Invention

The present invention provides an effect of enabling a drive-forced function to be provided speedily even in an environment in which a remote UI is used, by having an information display apparatus implement a drive-forced function without involving an information providing apparatus.

### Brief Description of Drawings

FIG.1 is a block diagram of an information display system according to Embodiment 1 of the present invention;
FIG.2 is a flowchart for explaining the operation of an information display system according to Embodiment 1 of the present invention;
FIG.3 is a block diagram of an information display system according to Embodiment 2 of the present invention;
FIG.4 is a flowchart for explaining the operation of an information display system according to Embodiment 2 of the present invention;
FIG.5 is a block diagram of an information display system according to Embodiment 3 of the present invention (1);
FIG.6 is a flowchart for explaining the operation of an information display system according to Embodiment 3 of the present invention; and
FIG.7 is a block diagram of an information display system according to Embodiment 3 of the present invention (2).

### Description of Embodiments

### (Embodiment 1)

An information display system according to Embodiment 1 of the present invention is described below with reference to the accompanying drawings.

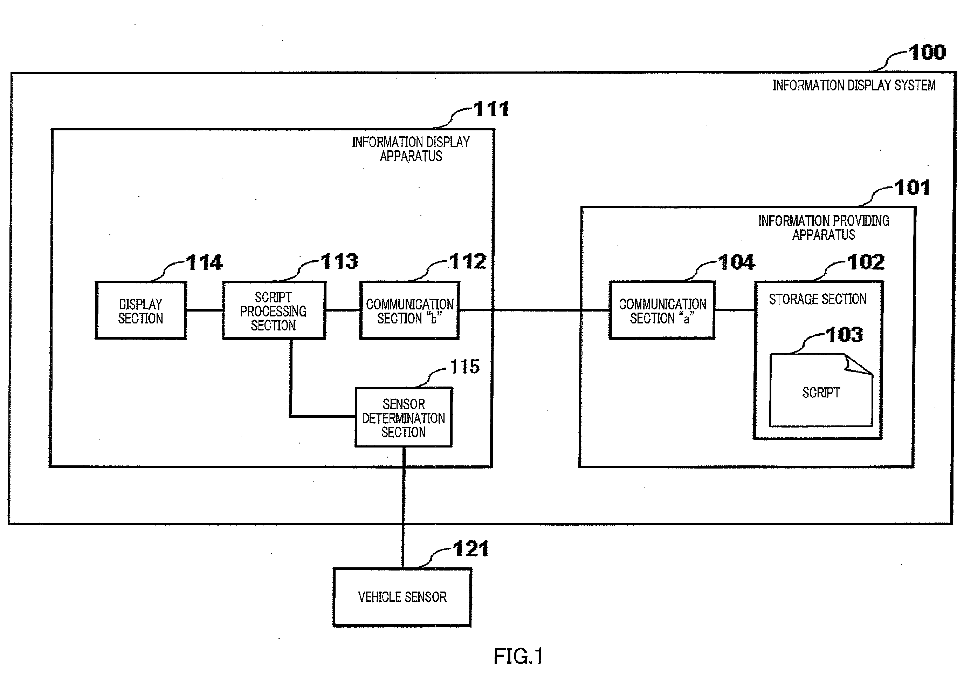

FIG.1 is a block diagram of information display system 100 according to Embodiment 1 of the present invention. Information display system 100 of Embodiment 1 of the present invention is mainly formed of information providing apparatus 101 and information display apparatus 111, and has a configuration enabling connection to vehicle sensor 121 provided outside information display system 100.

Information providing apparatus 101 is, for example, a car navigation apparatus that does not have a display screen, a CD player, a DVD player, a BD player, a TV tuner, a mobile phone, or the like, and information display apparatus 111 is, for example, a car navigation apparatus (or system) that has a display screen, a rear display apparatus (or system), or the like.

Advantages of configuring information providing apparatus 101 and information display apparatus 111 as separate entities are freedom of the installation location inside a vehicle and the ability to easily take either one of them outside the vehicle.

Information providing apparatus 101 includes storage section 102 that stores script 103, and communication section "a" 104.

Storage section 102 is a storage apparatus such as a flash memory that stores at least one script 103 for composing a display image to be displayed on information display apparatus 111, and provides script 103 to communication section "a" 104 as necessary.

Similar implementation is also possible when, in addition to storing script 103 in storage section 102, video, image, or suchlike data composing another display image is stored.

Similar implementation is also possible when a nonvolatile storage apparatus such as an HDD or a volatile storage apparatus such as DRAM is used as storage section 102.

Script 103 includes at least a description of display parts composing an image displayed on information display apparatus 111 and a description relating to the arrangement thereof, a description relating to animation operation of each display part, and a drive-forced flag for each display part.

Here, a display part is information for creating a display image, and denotes object data such as a button, icon, image, list information data, or the like, for example.

Also, a drive-forced flag is an entity indicating a display state (a drive-forced display or normal display state described later herein) at the time of drive of an above part, being a flag including a true/false value or the like added for each above display part.

However, a drive-forced flag need not be provided for all display parts, and by deciding upon a prescribed value for a case in which a drive-forced flag is not to be provided, for example, may be set only for a display part different from the prescribed value.

That is to say, among display parts, there are some that are operable when the vehicle is stationary and should be made inoperable when the vehicle is driving. Consequently, setting a drive-forced flag to True for these parts makes it clear that they are inoperable when the vehicle is driving.

By this means, when the fact that the vehicle is driving is detected, a setting can be switched to that makes these display parts inoperable (that prevents reception of an operation by an operator), and furthermore processing to change the display state - such as changing the color, for example - can easily be performed in order to notify the operator of the inoperable state.

Script 103 is written as an ECMA script, for example, and a drive-forced flag is represented as an object property. Similar implementation is also possible if script 103 is written in another script language such as Perl, VBScript, or the like.

Similar implementation is also possible if script 103 is written in an XML file, HTML file, or suchlike markup language, and a drive-forced flag is specified as an attribute.

Communication section "a" 104 is an entity that receives script 103 from storage section 102 and transmits it to information display apparatus 111, being, for example, an Ethernet (registered trademark) controller.

As long as script 103 can be sent to information display apparatus 111, similar implementation is also possible with another cable communication method such as asynchronous communication, or a radio communication method such as IEEE802. 11b.

Alternatively, two-way communication capability may be provided, with not only script 103 but also other video or images being communicated, or information display apparatus 111 or another apparatus performing communication other than that used in the present invention.

Information display apparatus 111 is mainly formed of communication section "b" 112, script processing section 113, display section 114, and sensor determination section 115 as a sensor determination apparatus.

Communication section "b" 112 receives script 103 transmitted from communication section "a" 104, and sends the received script to script processing section 113. Communication section "b" 112 is, for example, an Ethernet (registered trademark) controller.

As long as script 103 can be received from communication section "a" 104, similar implementation is also possible with another cable communication method such as asynchronous communication, or a radio communication method such as IEEE802. 11b.

Alternatively, two-way communication capability may be provided, with not only script 103 but also other video or images being communicated, or information display apparatus 111 or another apparatus performing communication other than that used in the present invention.

Script processing section 113 is an entity that interprets script 103 received from communication section "b" 112, composes an image to be displayed on display section 114, and displays this on display section 114, being, for example, a microcomputer having a CPU, ROM, RAM, and so forth, and is implemented in this case, for example, by having the CPU execute a computer program stored in ROM while using RAM as a work area.

Script processing section 113 determines from a drive-forced flag in script 103 and sensor determination section 115 information whether the state of each display part included in script 103 is a normal display state or drive-forced display state, and creates an image to be displayed on display section 114.

Here, normal display is a display method used when the vehicle is stationary, and drive-forced display denotes a display method used while the vehicle is driving. For example, in normal display, display is performed that indicates that operation by an operator is possible, and in drive-forced display, display is performed that indicates that operation by an operator is not possible.

For example, deepening the color of a display part may be performed for a normal display, and lightening the color of a display part for a drive-forced display, Similar implementation is also possible if script processing section 113 interprets script 103 and composes speech.

Display section 114 is an entity that displays an image composed by script processing section 113, being, for example, a liquid crystal monitor or suchlike display.

Display section 114 may also be used to display an image composed other than by script processing section 113. Furthermore, similar implementation is also possible if display section 114 outputs speech as a speaker.

Sensor determination section 115 determines the vehicle's driving state (at least, whether the vehicle is driving or is stationary) based on a signal input from vehicle sensor 121 installed in the vehicle, and reports this to script processing section 113.

Vehicle sensor 121 is a sensor that reports information for determining the vehicle's driving state to information display apparatus 111, being, for example, a pulse generator attached to an axle of the vehicle.

Vehicle sensor 121 may also be an acceleration sensor, a sensor that determines whether or not the parking brake is on, or the like.

The processing operations of an information display system configured as described above will now be explained.

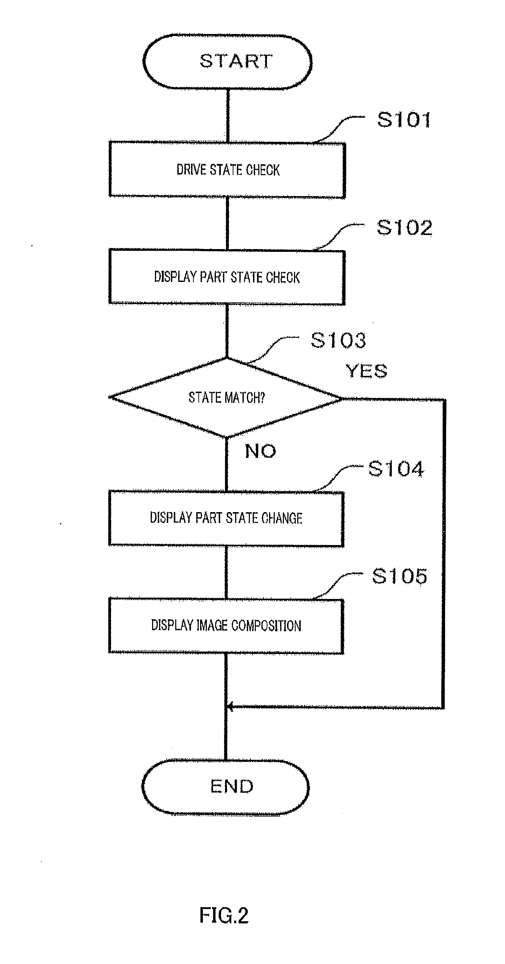

FIG.2 is a flowchart of drive-forced processing executed by script processing section 113 in information display system 100 according to Embodiment 1 of the present invention.

First, in step S101, sensor determination section 115 determines the vehicle's driving state based on a signal from vehicle sensor 121, and in step S102 script processing section 113 checks whether the state of a display part described in script 103 is the normal display state or the drive-forced display state.

Then script processing section 113 determines whether the vehicle's driving state determined by sensor determination section 115 and a display part state match (step S103).

If, in step S103, sensor determination section 115 makes a "vehicle driving" determination and script processing section 113 determines that a display part described in script 103 is in the drive-forced display state, or sensor determination section 115 makes a "vehicle stationary" determination and script processing section 113 determines that a display part described in script 103 is in the normal display state, drive-forced processing is terminated (step S103: YES). Otherwise, a transition is made to step S104 (step S103: NO).

If a "NO" determination is made in step S103, the display state of a display part described in script 103 is changed. That is to say, if the display part state displayed on display section 114 is the normal display state it is changed to the drive-forced display state, and if the display part state is the drive-forced display state it is changed to the normal display state (step S104).

Then script processing section 113 composes a display image in accordance with the display part state (step S105), displays the composed display image on display section 114, and terminates drive-forced processing.

Of the display parts included in script 103, script processing section 113 executes the above processing on all display parts for which a drive-forced flag is valid, and composes a screen according to the state of vehicle sensor 121.

As described above, script processing section 113 can execute drive-forced processing, determine whether the state of a display part whose display state is changeable described in script 103 is normal display or drive-forced display according to the state of vehicle sensor 121, and display a composed image on display section 114.

The sensor determination section in the above embodiment may be provided in a cradle or the like in which an information display apparatus is fixed inside the vehicle and configured so as to be able to communicate with another apparatus. In this case, the above-described effect can also easily be obtained by using a portable terminal apparatus such as a common mobile phone as the information providing apparatus.

As described above, according to this embodiment, information display apparatus 111 can recompose and display a drive-forced screen based on information from vehicle sensor 121, display parts composing a display image and the arrangement thereof, a description of the animation operation and so forth of each display part, and a drive-forced flag for each display part, which is included in script 103, without involving information providing apparatus 101, enabling a drive-forced function to be implemented without delay.

### (Embodiment 2)

An information display system according to Embodiment 2 of the present invention is described below with reference to the accompanying drawings.

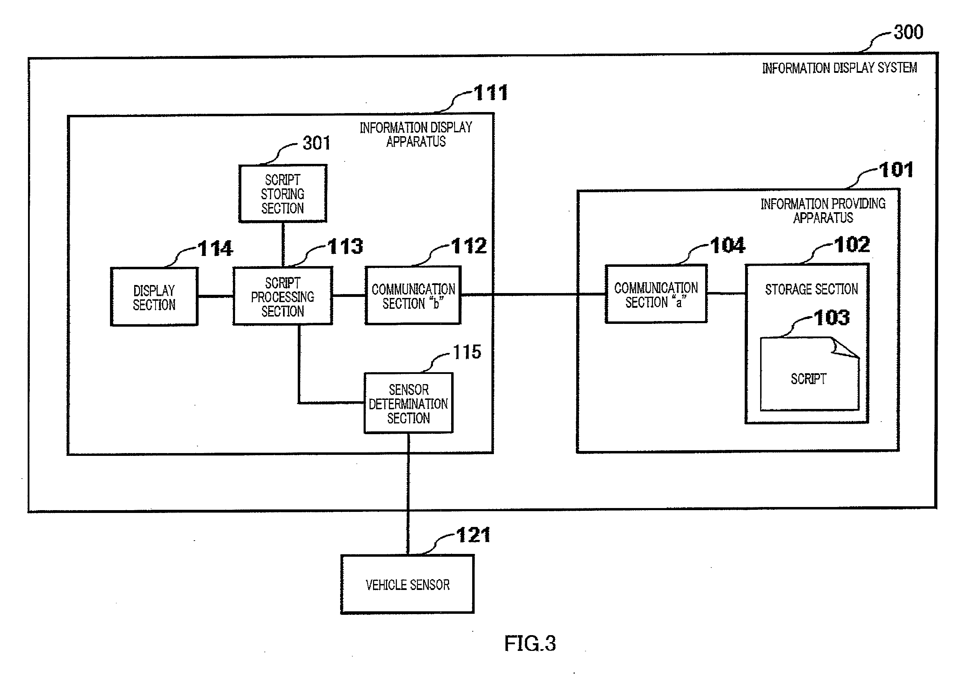

FIG.3 is a block diagram of information display system 300 according to Embodiment 2 of the present invention. Configuration parts in FIG.3 identical to those in FIG.1 (Embodiment 1) are assigned the same reference codes as in FIG.1, and descriptions thereof are omitted here. Only points of difference from Embodiment 1 are described below.

Script 103 includes at least a description of display parts composing an image displayed on information display apparatus 111 and a description relating to the arrangement thereof, a description relating to animation operation of each display part, and a description relating to normal display and drive-forced display for each display part.

Normal display is a display method used when a vehicle is stationary, and drive-forced display denotes a display method used while the vehicle is driving. For example, in normal display, display is performed that indicates that operation by an operator is possible, and in drive-forced display, display is performed that indicates that operation by an operator is not possible. Deepening the color of a display part may be performed for a normal display, and lightening the color of a display part for a drive-forced display.

However, normal display and drive-forced display need not be different for all display parts, and, for example, if the number of buttons displayed simultaneously is small, exactly the same display may be used for normal display and drive-forced display.

That is to say, among display parts, there are some that are operable when the vehicle is stationary and should be made inoperable when the vehicle is driving.

By this means, when the fact that the vehicle is driving is detected, a setting can be switched to that makes these display parts inoperable (that prevents reception of an operation by an operator), and furthermore processing to change the display state - such as changing the color, for example - can easily be performed in order to notify the operator of the inoperable state.

Information display apparatus 111 is mainly formed of communication section "b" 112, script processing section 113, display section 114, script storing section 301, and sensor determination section 115.

Script processing section 113 temporarily stores script 103 in script storing section 301, and fetches script 103 from script storing section 301 when necessary.

Script processing section 113 determines from information of sensor determination section 115 whether the state is a normal display state or drive-forced display state, and creates an image to be displayed on display section 114 using a drive-forced display script or normal display script included in script 103. Similar implementation is also possible if script processing section 113 interprets script 103 and composes speech.

Script storing section 301 is an entity that temporarily stores script 103 received from script processing section 113 and transfers script 103 to script processing section 113 in response to a request from script processing section 113, being RAM, an HDD, or the like, for example.

By using this kind of configuration, script processing section 113 can temporarily store a script received from information providing apparatus 101 and reuse it at any time, making retransmission from information providing apparatus 101 unnecessary when switching between normal display and drive-forced display. Furthermore, retransmission from information providing apparatus 101 is also likewise unnecessary when a transition is made to the same screen as a script being stored.

If there is a script storage request that exceeds the storage capacity of script storing section 301, the new script is stored after deleting some of the previously stored scripts.

The method of selecting scripts to be deleted may be, for example, to check the script usage history and perform deletion in order from the script with the oldest time of most recent use.

Similar implementation is also possible when, in addition to storing script 103 in script storing section 301, video, image, or suchlike data composing another display image is stored.

Sensor determination section 115 determines the vehicle's driving state (at least, whether the vehicle is driving or is stationary) based on a signal input from vehicle sensor 121 installed in the vehicle, and reports this to script processing section 113.

The processing operations of an information display system configured as described above will now be explained.

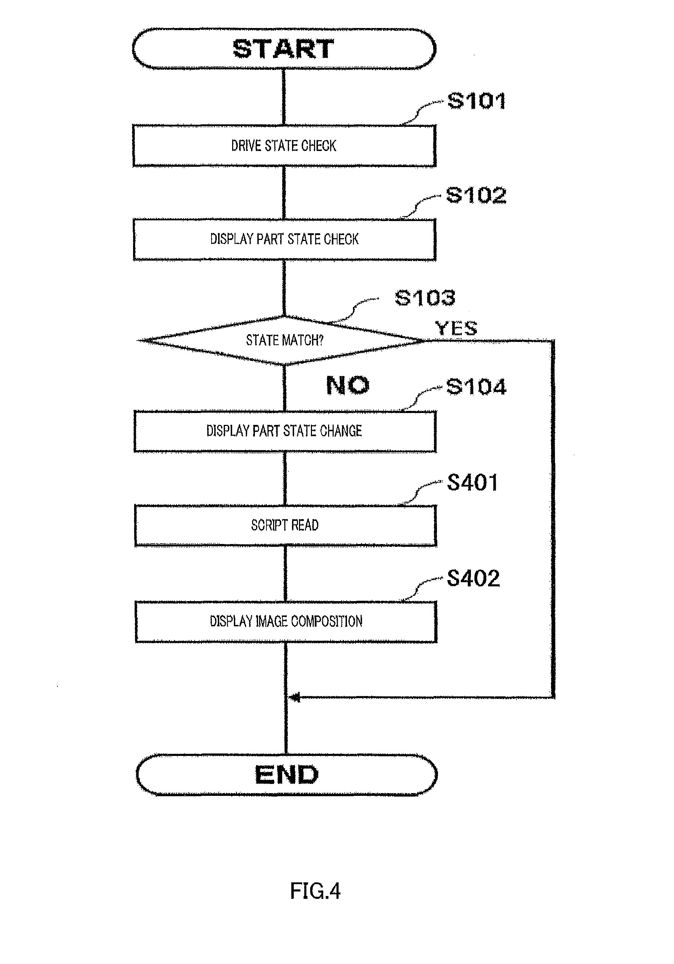

FIG.4 is a flowchart of drive-forced processing executed by script processing section 113 in information display system 300 according to Embodiment 2 of the present invention. Steps in FIG.4 including processing identical to that in FIG.2 (Embodiment 1) are assigned the same reference codes as in FIG.2, and descriptions thereof are omitted here. Only points of difference from Embodiment 1 are described below.

After step S104, script processing section 113 reads a drive-forced display or normal display script from script storing section 301 in accordance with the display part state (step S401).

Furthermore, script processing section 113 composes a display image using the read script (step S402), displays the composed display image on display section 114, and terminates drive-forced processing.

Script processing section 113 executes the above processing on all display parts included in script 103, and composes a screen according to the state of vehicle sensor 121.

As described above, according to this embodiment, information display apparatus 111 can recompose and display a drive-forced screen based on information from vehicle sensor 121, display parts composing a display image read from script storing section 301 and the arrangement thereof, a description of the animation operation and so forth of each display part, and script 103 corresponding to the presence or absence of drive-forcing for each display part, without involving information providing apparatus 101, enabling a drive-forced function to be implemented without delay.

### (Embodiment 3)

An information display system according to Embodiment 3 of the present invention is described below with reference to the accompanying drawings.

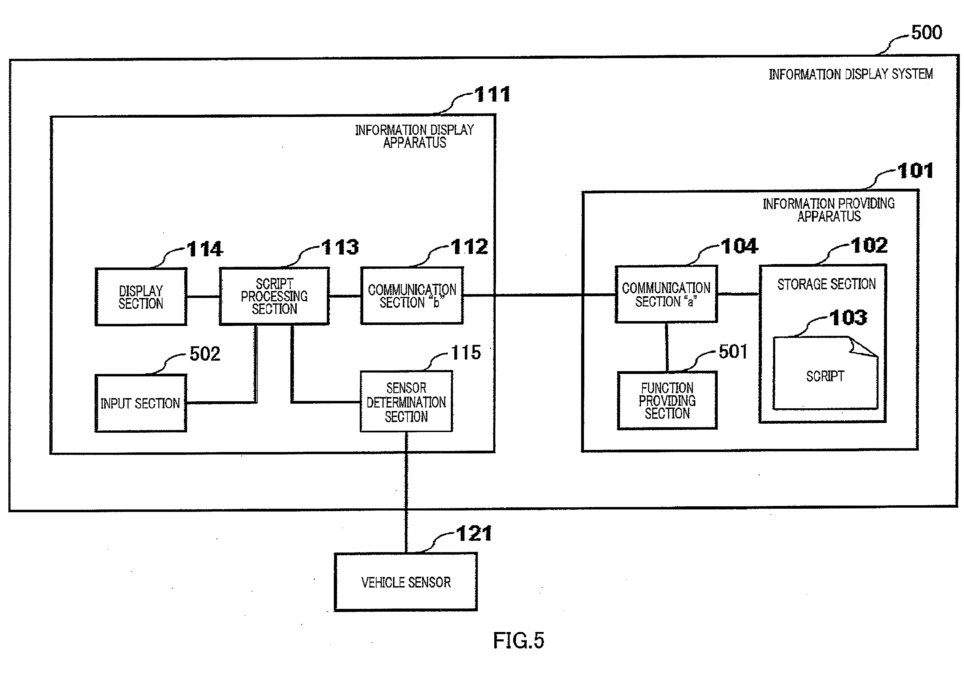

FIG.5 is a block diagram of information display system 500 according to Embodiment 3 of the present invention. Configuration parts in FIG.5 identical to those in FIG.1 (Embodiment 1) are assigned the same reference codes as in FIG.1, and descriptions thereof are omitted here. Only points of difference from Embodiment 1 are described below.

Communication section "a" 104 is an entity that performs two-way communication among storage section 102, function providing section 501, and information display apparatus 111, being, for example, an Ethernet (registered trademark) controller. As long as two-way communication can be performed among storage section 102, function providing section 501, and information display apparatus 111, similar implementation is also possible with another cable communication method such as asynchronous communication, or a radio communication method such as IEEE802. 11b.

Function providing section 501 has a characteristic of being controlled from information display apparatus 111 via communication section "a" 104, and provides a function as a terminal of information providing apparatus 101. In addition, function providing section 501 can also transmit information to information display apparatus 111 via communication section "a" 104.

Function providing section 501 is a CD deck, for example, and has its play, stop, and suchlike functions controlled from information display apparatus 111, and transmits a currently playing track number and playing time to information display apparatus 111. Similar implementation is also possible if function providing section 501 is a radio, DVD player, or suchlike audio function, car navigation function, handsfree communication function, or the like.

Information display apparatus 111 is mainly formed of communication section "b" 112, script processing section 113, display section 114, sensor determination section 115, and input section 502.

Communication section "b" 112 is an entity that performs two-way communication between communication section "a" 104 and script processing section 113, being, for example, an Ethernet (registered trademark) controller. As long as two-way communication can be performed between communication section "a" 104 and script processing section 113, similar implementation is also possible with another cable communication method such as asynchronous communication, or a radio communication method such as IEEE802. 11b.

Script processing section 113 is an entity that interprets script 103 received from communication section "b" 112, composes an image to be displayed, and displays this on display section 114, and at the same time processes input from input section 502 and transmits operation contents to information providing apparatus 101 in accordance with script 103, being, for example, a microcomputer having a CPU, ROM, RAM, and so forth.

Input section 502 is an entity that receives input from a user and reports that input to script processing section 113, being, for example, a touch panel. Similar implementation is also possible in the case of input by means of a hardware switch or speech recognition.

The processing operations of a display apparatus configured as described above will now be explained.

A flowchart of drive-forced processing executed by script processing section 113 is similar to that described in Embodiment 1 (FIG.2), and therefore a description thereof is omitted here.

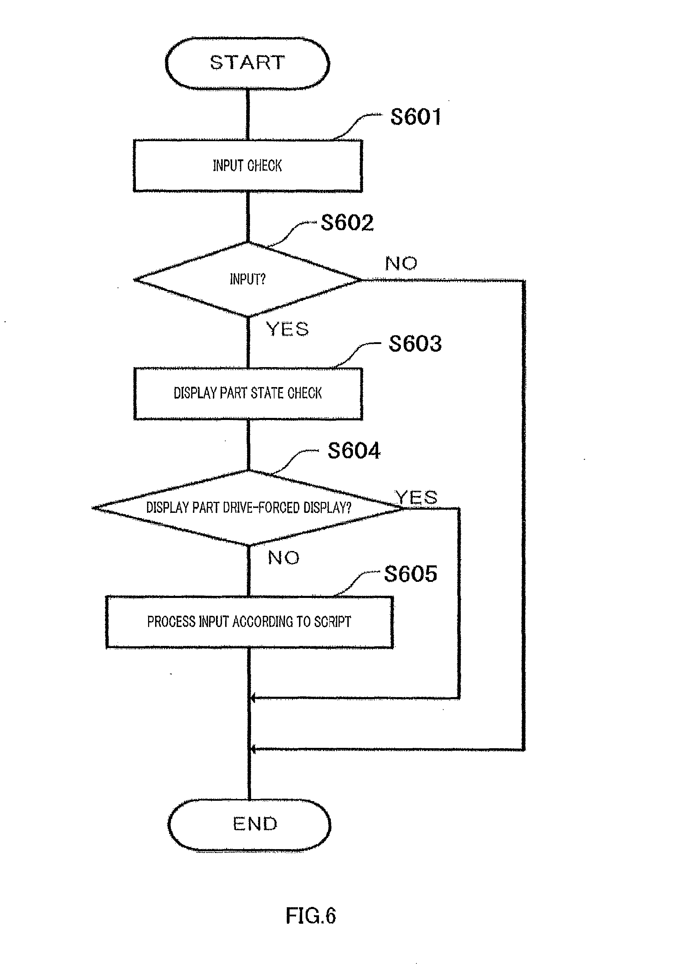

FIG.6 is a flowchart of input processing executed by script processing section 113 in information display system 500 according to Embodiment 3 of the present invention.

First, in step S601, a check is performed as to whether there is input from input section 502 for a display part. For example, script processing section 113 receives a signal as to whether coordinates on a display part have been touched on a touch panel.

Next, script processing section 113 makes a determination as to step S601 input (step S602). If there is no input, information processing is terminated (step S602: NO). If there is input, the processing flow proceeds to step S603 (step S602: YES).

In the case of a "YES" determination in step S602, script processing section 113 checks whether the display part state is the normal display state or the drive-forced display state (step S603).

Then script processing section 113 determines the display part state (step S604). If the display part state is the drive-forced display state, input is assumed to be invalid and information processing is terminated (step S604: YES). If the display part state is normal display, a transition is made to step S605 (step ST604: NO).

In the case of a "NO" determination in step S604, input section 502 input operation is assumed to be valid, that input is processed based on the script 103 description, and information processing is terminated (step S605). Also, if information transmission to function providing section 501 is described as being necessary for that input in script 103, information is transmitted to function providing section 501 via communication section "b" 112.

Script processing section 113 executes the above processing on all display parts for which a drive-forced flag is valid among the display parts included in script 103.

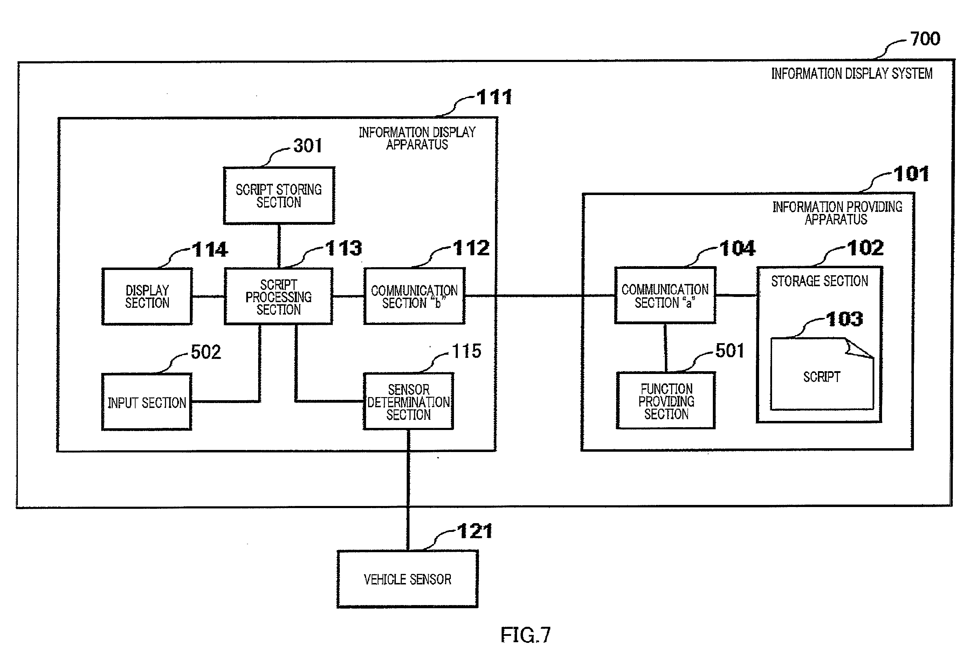

It is also possible for information display apparatus 111 according to Embodiment 2 to be provided with input section 502, as shown in FIG.7. That is to say, information display apparatus 111 in information display system 700 may be formed of communication section "b" 112, script processing section 113, display section 114, script storing section 301, sensor determination section 115, and input section 502. Information display apparatus 111 in FIG.7 is described below. Configuration parts in FIG.7 identical to those in FIG.1, FIG.3, and FIG.5 are assigned the same reference codes as in FIG.1, FIG.3, and FIG.5, and descriptions thereof are omitted here.

Script processing section 113 in FIG.17 is an entity that interprets script 103 received from communication section "b" 112, composes an image to be displayed, and displays this on display section 114, and at the same time processes input from input section 502 and transmits operation contents to information providing apparatus 101 in accordance with script 103, being, for example, a microcomputer having a CPU, ROM, RAM, and so forth.

Script processing section 113 is an entity that temporarily stores script 103 in script storing section 301 and fetches a script when necessary, being RAM, an HDD, or the like, for example.

Script processing section 113 determines from sensor determination section 115 information whether the state is a normal display state or drive-forced display state, and creates an image to be displayed on display section 114 using a drive-forced display script or normal display script included in script 103. Similar implementation is also possible if script processing section 113 interprets script 103 and composes speech.

As described above, script processing section 113 can execute drive-forced processing, determine whether the state of a display part described in script 103 is a normal display state or drive-forced display state according to the state of vehicle sensor 121, and display a composed image on display section 114, and also process input from input section 502 based on a drive-forced flag for each display part described in script 103.

As described above, according to this embodiment, information display apparatus 111 can recompose and display a drive-forced screen based on information from vehicle sensor 121, display parts composing a display image and the arrangement thereof, a description of the animation operation and so forth of each display part, and script 103 that includes a drive-forced flag for each display part, and process input from a user based on drive-forcing, without involving information providing apparatus 101, enabling a drive-forced function to be implemented without delay.

That is to say, according to the present invention, by implementing a user interface by having a script sent from an information providing apparatus executed by a display apparatus, the advantage of a remote UI of being able to provide a user interface suitable for various kinds of information providing apparatuses without updating the display apparatus can be offered since the information providing apparatus provides its own user interface by means of a script, and at the same time a drive-forced function that is a function performing a processing operation that restricts a user operation screen according to vehicle drive can be made to adapt speedily to a change in the driving state of the vehicle.

The disclosures of Japanese Patent Application No.2010-047444, filed on March 4, 2010, and Japanese Patent Application No.2010-053996, filed on March 11, 2010, including the specifications, drawings and abstracts, are incorporated herein by reference in their entirety.

### Industrial Applicability

A display apparatus of the present invention is suitable for use as an information display system of a car navigation, car AV, or suchlike in-vehicle system having a drive-forced function that improves user safety by determining whether the vehicle is driving or is stationary and changing display contents accordingly.

### Reference Signs List

100, 300, 500, 700 Information display system
101 Information providing apparatus
102 Storage section
103 Script
104 Communication section "a"
111 Information display apparatus
112 Communication section "b"
113 Script processing section
114 Display section
115 Sensor determination section
121 Vehicle sensor
301 Script storing section
501 Function providing section
502 Input section

## Claims

1. An information display system that is installed in a vehicle, the information display system comprising:
an information providing apparatus that transmits a script of a display part;
an information display apparatus that interprets a script transmitted by the information providing apparatus and displays a composed display image; and
a sensor determination apparatus that reports a driving state of the vehicle to the display apparatus, wherein:
the display part can change between at least two display states of normal display and drive-forced display; and
the information display apparatus changes a display state of the display part based on a report result from the sensor determination apparatus.

2. The information display system according to claim 1, wherein the information display apparatus, when the fact that the vehicle is driving is reported to the information display apparatus from the sensor determination apparatus and a display state of the display part is normal display, changes a display state of a display part to drive-forced display.

3. The information display system according to claim 1, wherein;
a script transmitted to the information display apparatus by the information providing apparatus includes a drive-forced flag indicating a driving state provided for the display part; and
the information display apparatus changes a state of a display part based on a driving state reported from the sensor determination apparatus and the drive-forced flag.

4. The information display system according to claim 3, wherein the drive-forced flag is provided only for a display part used for operation of a function that is operable when the vehicle is stationary and that is inoperable when the vehicle is driving.

5. The information display system according to claim 1, wherein:
the information display apparatus further comprises a script storing section that stores a script transmitted by the information providing apparatus; and
the information display apparatus reads a script stored in the script storing section in accordance with a state of a display part for which a display state has been changed, and composes and displays a display image.

6. An information display apparatus that is installed in a vehicle, and is connected to an information providing apparatus that transmits a script of a display part composing a display image, and a sensor determination apparatus that reports a driving state of the vehicle to the display apparatus, the information display apparatus comprising:
a script processing section that interprets a script transmitted by the information providing apparatus and receives a report from the sensor determination apparatus; and
a display section that displays a display image interpreted and composed by the script processing section, wherein the display part is changeable to at least two display states of normal display and drive-forced display, and when the fact that the vehicle is driving is reported to the script processing section from the sensor determination apparatus and a display state of the display part is the normal display, the script processing section changes a display state of the display part to the drive-forced display.

7. The information display apparatus according to claim 6, wherein the sensor determination apparatus is provided inside the information display apparatus.

8. The information display apparatus according to claim 6, wherein:
a script transmitted from the information providing apparatus includes a drive-forced flag indicating a display state that is provided for the display part; and
the information display apparatus changes a state of a display part based on a driving state reported from the sensor determination apparatus and the drive-forced flag.

9. The information display apparatus according to claim 8, further comprising an input section that receives operation input from a user, wherein the input section, when having received operation input from a user, restricts operation input based on information reported from the sensor determination apparatus.

10. The information display apparatus according to claim 6, further comprising a script storing section that stores a script transmitted by the information providing apparatus, wherein the script processing section reads a script stored in the script storing section, and composes and displays a display image of the drive-forced display.

11. An information providing apparatus that is installed in a vehicle, the information providing apparatus comprising a storage section that stores a script to be transmitted to an information display apparatus that interprets a script and displays a composed display image, wherein a script stored in the storage section includes a display part capable of changing between at least two display states of normal display and drive-forced display.
